# EUROPÄISCHE PATENTSCHRIFT

(11) **EP 3 393 722 B1**
(45) Veröffentlichungstag und Bekanntmachung des Hinweises auf die Patenterteilung: **30.08.2023**
(21) Anmeldenummer: 16808657.7
(22) Anmeldetag: 08.12.2016
(51) Int. Cl.: B25F 5/02, H01M 50/213, H01R 11/12, H01R 9/18, B25F 5/00, B25D 17/24, B25D 17/04

(54) **HANDWERKZEUGMASCHINE**
HAND POWER TOOL
OUTIL ÉLECTRIQUE A MAIN

(30) Priorität: 22.12.2015 DE 102015226406; 05.02.2016 DE 102016201802
(43) Veröffentlichungstag der Anmeldung: 31.10.2018
(73) Patentinhaber: Robert Bosch GmbH, 70442 Stuttgart (DE)
(72) Erfinder: ZAHN, Wolf, 70439 Stuttgart (DE); KNEER, Florian, 73105 Duernau (DE)
(86) Internationale Anmeldenummer: PCT/EP2016/080272
(87) Internationale Veröffentlichungsnummer: WO 2017/108433

(56) Entgegenhaltungen:
- EP-A1- 2 240 303
- EP-A2- 2 602 065
- WO-A2-2014/027439
- US-A- 5 553 675
- US-A1- 2015 151 423

## Beschreibung

Die vorliegende Erfindung betrifft eine Handwerkzeugmaschine gemäß dem Oberbegriff des Anspruchs 1. Eine solche Handwerkzeugmaschine ist aus der US 5 553 675 A bekannt.

Elektrische Handwerkzeugmaschinen sind grundsätzlich bekannt und werden über einen Netzanschluss mit Strom versorgt. Alternativ ermöglichen Akkugeräte eine hohe Flexibilität beim Arbeiten, da sie insbesondere unabhängig von Netzstrom sind. Auf diese Weise können beispielsweise auch Außenarbeiten bequem durchgeführt werden, so dass bei einem Betrieb einer Handwerkzeugmaschine vielfach vorgesehen ist, Akkupacks einzusetzen. Derartige Akkupacks sind grundsätzlich bekannt und weisen in der Regel eine Mehrzahl von in Parallel- und/oder Reihenschaltung verbundener wiederaufladbare Akkumulatoren, beispielsweise drei in Reihe geschaltete, zylinderförmige Li-lonen-Zellen mit z.B. je 3,6 V mit einer Gesamtspannung von 10,8 V, auf. Im Rahmen dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann, die für den Betrieb einer Handwerkzeugmaschine benötigte Energie liefert, und austauschbar in einer Kammer, einer Schnittstelle oder dergleichen der Handwerkzeugmaschine anbringbar ist.

Das Zuordnen des Akkupacks zur Handwerkzeugmaschine erfolgt durch Einstecken beziehungsweise Einschieben des Akkupacks in eine komplementäre Einsteckbuchse des Gerätegehäuses, wobei das Akkupack eine Schnittstelle aufweist, die mit einer komplementären Gegenschnittstelle der Handwerkzeugmaschine derart koppelbar ist, dass beim Koppeln die Handwerkzeugmaschine elektrisch an den Akkupack angekoppelt und mechanisch verriegelt wird. Die elektrische Kontaktierung erfolgt zumeist über Kontaktelemente im Bereich der Verriegelungsvorrichtung. Zum Koppeln der beiden Schnittstellen der Handwerkzeugmaschine und des Akkupacks ist gewöhnlich das letztere mit einer überstehenden Verrastungsvorrichtung versehen, die in eine komplementäre Einsteckbuchse der ersteren eingeschoben und in dieser verrastet wird.

Somit soll unter einer Schnittstelle eine Vorrichtung verstanden werden, die dazu vorgesehen ist, eine elektrische und mechanische Verbindung zwischen einer Handwerkzeugmaschine und einem Akkupack und/oder zwischen einem Ladegerät und einem Akkupack direkt oder indirekt herzustellen. Sowohl die Akkupacks als auch die Handwerkzeugmaschinen und Ladegeräte und damit die jeweiligen Schnittstellen unterliegen einer steten Weiterentwicklung Die Kontaktelemente der Handwerkzeugmaschine sind üblicherweise verschleißende Bauteile. Bei stark vibrierenden bei anderweitig hochbelasteten Handwerkzeugmaschinen kann es mechanisch oder durch Funkenerosion zu Verschleiß kommen, welcher bis hin zum Versagen der Handwerkzeugmaschine führt, obwohl die anderen Funktionselemente noch arbeitsfähig sind. Die Kontaktelemente und Gegenkontaktelemente der Schnittstellen können zwar von Fachbetrieben ausgetauscht werden, allerdings erweist es sich als nachteilig, dass der Austausch in der Regel ein Einsenden des Gerätes durch den Benutzer erfordert. Ein Austausch durch den Benutzer wird zumeist nicht unterstützt, weil unter anderem nicht sichergestellt werden kann, dass beim anschließenden Zusammenbauen alle sicherheitsrelevanten Teile wieder korrekt montiert sind.

### Offenbarung der Erfindung

Aufgabe der Erfindung ist es, die oben genannten Nachteile zu verbessern und eine Handwerkzeugmaschine der eingangs genannten Art bereitzustellen, bereitzustellen, deren Schnittstelle so ausgelegt ist, dass beschädigte und/oder nicht mehr funktionierende Kontaktelemente einer Schnittstelle unter geringem Aufwand ausgebaut und ausgetauscht werden können, wobei der Einbau- und/oder der Austauschprozess möglichst einfach, kostengünstig und insbesondere von einem Benutzer selber durchführbar sein soll.

Diese Aufgabe wird durch eine Handwerkzeugmaschine gemäß Anspruch 1 gelöst. Vorteilhafte Ausgestaltungen, Varianten und Weiterbildungen der Erfindung sind den Unteransprüchen zu entnehmen.

Gemäß der Erfindung ist eine Handwerkzeugmaschine offenbart, umfassend ein Gehäuse mit einem Handgriff, einen in dem Gehäuse angeordneten Antriebsmotor, und eine Schnittstelle zum Herstellen einer mechanischen und/oder elektrischen Verbindung der Handwerkzeugmaschine mit einem Akkupack. Erfindungsgemäß ist vorgesehen, dass die Schnittstelle ein Basiselement zur elektrischen und/oder mechanischen Verbindung der Schnittstelle mit der Handwerkzeugmaschine und einen separaten Kontaktträger mit zumindest einem Kontaktelement zur elektrischen und/oder mechanischen Kontaktierung mit zumindest einem korrespondierenden Gegenkontaktelement an dem Akkupack aufweist. Das Basiselement ist innerhalb der Handwerkzeugmaschine verbaut und stellt die elektrische Verbindung innerhalb der Handwerkzeugmaschine her. Der Kontaktträger ist dagegen derart mit dem Basiselement verbunden, dass durch die Verbindung auch der elektrische Kontakt zwischen diesen hergestellt wird. Auf dieses Weise ist gewährleistet, dass die Schnittstelle einen zweigeteilten Aufbau aufweist, wobei der Kontaktträger, welcher die Kontaktelemente aufweist, durch den Benutzer selbst ausgewechselt werden kann, wodurch Kosten eingespart und die Lebensdauer der Handwerkzeugmaschine verlängert werden kann.

Erfindungsgemäß ist das Basiselement fest in das Gehäuse der Handwerkzeugmaschine integriert und der Kontaktträger ist über wenigstens ein Kontaktmittel lösbar am Basiselement angeordnet, so dass der Kontaktträger derart lösbar am Basiselement angeordnet ist, dass der Kontaktträger von einem Benutzer ausgetauscht werden kann. Das Basiselement, welches mit der Handwerkzeugmaschine verbaut ist und nicht zum Austausch durch den Benutzer vorgesehen ist, stellt die elektrische Verbindung innerhalb der Handwerkzeugmaschine her. Durch die Möglichkeit des Selbstaustausches könnten auch Handwerkzeugmaschinen, die heute mit hochwertigen Materialien ausgestattet sind, nachträglich mit schneller verschleißenden, aber günstigeren Werkstoffen ausgeführt werden. Bevorzugterweise ist das Kontaktmittel als elektrischer Leiter ausgebildet. Alternativ oder zusätzlich kann das Kontaktmittel als Befestigungs- und Verbindungsmittel in Form einer Schraube oder Schraubhülse ausgebildet sein, wobei vorteilhafterweise der Kontaktträger wenigstens eine Aussparung zur Durchführung des Kontaktmittels aufweist, so dass durch das Aufschrauben zwischen dem Basiselement und dem Kontaktträger der elektrische Kontakt hergestellt wird. Durch Lösen der Verschraubung kann der Kontaktträger nebst Kontaktelementen entfernt und gegen ein entsprechendes Ersatzteil ausgetauscht werden, ohne dass das Gehäuse der Handwerkzeugmaschine selbst geöffnet und/oder die Kontaktelemente in einem separaten Schritt mit der Steuerung der Handwerkzeugmaschine verbunden werden müssten. Zusätzlich können durch die Kontaktmittel, beispielsweise durch weitere Schrauben oder durch Steckkontakte, weitere Kontakte insbesondere für ein Temperatursignal, eine Kodierung oder für eine Geräte-Kommunikation durch möglich sein.

Bevorzugterweise ist ferner vorgesehen, dass wenigstens ein erstes elektrisches Verbindungselement in die wenigstens eine Aussparung des Kontaktträgers integriert ist. Auf diese Weise können die Kontaktmittel unmittelbar durch die Verbindungselemente des Kontaktträgers hindurch geführt und auf Seiten der Handwerkzeugmaschine direkt in die Gegenkontaktelemente eingeschraubt werden. Erfindungsgemäß umfasst die Schnittstelle wenigstens ein zweites elektrisches Verbindungselement, insbesondere einen Kabelschuh, zur elektrischen Kontaktierung der Handwerkzeugmaschine. Es ist möglich, die Kontaktmittel durch die Verbindungselemente hindurch und auf Seiten der Handwerkzeugmaschine direkt in die Gegenkontaktelemente einzuschrauben, so dass das Basiselemente und der Kontaktträger fest aufeinander gepresst werden. Erfindungsgemäß weist das Basiselement wenigstens eine Öffnung zur Aufnahme des Kontaktmittels auf. Erfindungsgemäß ist das zweite elektrische Verbindungselement in die wenigstens eine Öffnung des Basiselementes integriert, so dass eine elektrischen Kontaktierung zwischen den Kontaktelementen und der Handwerkzeugmaschine bereits durch das Herstellen einer Verbindung zwischen dem Basiselement und dem Kontaktträger durch die Kontaktmittel selber und die jeweils integrierten Verbindungselementen ermöglicht wird.

Bevorzugterweise weist die Schnittstelle wenigstens ein elastisches Element, insbesondere ein Federelement auf, das dazu vorgesehen ist, die Schnittstelle gegenüber der Handwerkzeugmaschine verschiebbar und/oder federnd zu lagern, wie es für vibrierende Anwendungen besonders günstig bekannt ist. Dabei ist es besonders vorteilhaft, wenn das elastische Element zwischen der Schnittstelle und der Handwerkzeugmaschine, vorzugsweise zwischen dem Basiselement und/oder dem Kontaktträger und der Handwerkzeugmaschine angeordnet ist, wodurch einerseits ein Verschleiß des wenigstens einen handwerkzeugseitigen Kontaktelementes und/oder eines akkupackseitigen Kontaktelementes vermindert und andererseits ein Verschleiß der Kontaktmittel bzw. der Verbindungselemente reduziert werden kann.

Erfindungsgemäß ist das Basiselement fest in das Gehäuse der Handwerkzeugmaschine zu integrieren. Auf diese Weise können alle handwerkzeugseitigen Verbindungselemente bereits bei der Herstellung der Handwerkzeugmaschine fest bzw. dauerhaft mit dem Basiselement verbunden werden, so dass bei einem Austausch des Kontaktträgers grundlegende elektronische Kontaktierungen nicht mehr durchgeführt werden müssen.

Die erfindungsgemäße Handwerkzeugmaschine kann auch in einem Werkzeugsystem vorgesehen sein. Dementsprechend bildet auch eine Handwerkzeugmaschine zusammen mit einem Akkupack einen weiteren Gegenstand der Erfindung, wobei das Akkupack zumindest ein korrespondierendes Gegenkontaktelement zur elektrischen und/oder mechanischen Verbindung mit der Schnittstelle der Handwerkzeugmaschine aufweist.

Unter einer Handwerkzeugmaschine sollen generell sämtliche Handwerkzeugmaschinen mit einem in Bewegung, beispielsweise in Rotation und/oder Schwingung versetzbaren Werkzeugträger, der von einem Antriebsmotor antreibbar ist, wie beispielsweise Stabschrauber, Akku-Bohrer, Schlagbohrmaschinen, Multifunktionswerkzeuge, und/ oder Bohrschrauber verstanden werden. Unter Übertragung elektrischer Energie soll in diesem Zusammenhang insbesondere verstanden werden, dass die Handwerkzeugmaschine über einen Akku und/oder über eine Stromkabelanbindung mit Energie versorgt wird.

Grundsätzlich können als Akkuzellen für einen Akkupack verschiedene Akkumulatorentypen mit unterschiedlichen Materialien, wie beispielsweise Lithium-Ionen (Li-lon),Nickel-Cadmium (NiCd), Nickel-Metallhydrid (NiMH) oder Lithium-Polymer (LiPo), unterschiedlichen Bauformen, zum Beispiel runde, prismatische oder eckige, oder andere alternative Systeme, wie beispielsweise Brennstoffzellen, verwendet werden. Vorzugsweise werden insbesondere Lithiumionenzellen angewandt, da es insbesondere bei Lithiumionenzellen möglich ist, mehrere Akkuzellen zu Akkuzellenblöcken zusammenzufassen, in denen mehrere Akkuzellen in einer Parallelschaltung verbunden sind. Dabei ist es besonders vorteilhaft, dass der Zellenhalter Akkuzellen mit verschiedenen Durchmessern und Längen aufnehmen kann, wodurch die Anwendung des Zellenhalters bzw. des Zellenträgers in unterschiedlichen Akkupacks erreicht werden kann.

Unter einem Elektromotor sollen ganz allgemein alle Arten von elektrischen Verbrauchern, wie zum Beispiel ein EC-Motor, Linearantrieb, eine Lampe, eine Pumpe, ein Lüfter, ein Kompressor oder dergleichen verstanden werden. Der Vorteil der bürstenlose EC-Motoren liegt unter anderem darin, dass dies zum einen nahezu wartungsfrei sind und durch ihren hohen Wirkungsgrad während eines Akkubetriebes eine längere Arbeitszeit pro Akkuladung ermöglichen, wodurch sie besonders effizient sind. Ferner können Handwerkzeugmaschinen mit EC-Motoren sehr kompakt und leicht gebaut werden, wobei es besonders vorteilhaft ist, dass auch weniger Wärmeverluste entstehen, wodurch die Geräte nicht so heiß werden wie vergleichbare Geräte, und damit langlebiger sind.

### Zeichnungen

Die Erfindung wird im Folgenden anhand von bevorzugten Ausführungsbeispielen näher erläutert. Die Zeichnungen sind schematisch und zeigen:
- Fig. 1: beispielhaft eine Ansicht einer erfindungsgemäßen Handwerkzeugmaschine mit einem Akkupack;
- Fig. 2: eine perspektivische Detailansicht einer Schnittstelle zwischen der Handwerkzeugmaschine und einem eingesetzten Akkupack aus Fig. 1;
- Fig. 3: eine Detailansicht der Schnittstelle aus Figur 2;
- Fig. 4: eine perspektivische Explosionsansicht der handwerkzeugseitigen Schnittstelle ohne eingesetzten Akkupack;
- Fig. 5: eine perspektivische Ansicht der handwerkzeugseitigen Schnittstelle aus Figur 4;
- Fig. 6: eine perspektivische Explosionsdarstellung der handwerkzeugseitigen Schnittstelle aus Figur 5 in einer Draufsicht; und
- Fig. 7: eine perspektivische Explosionsdarstellung der handwerkzeugseitigen Schnittstelle aus Figur 5 und 6 in einer Unteransicht.

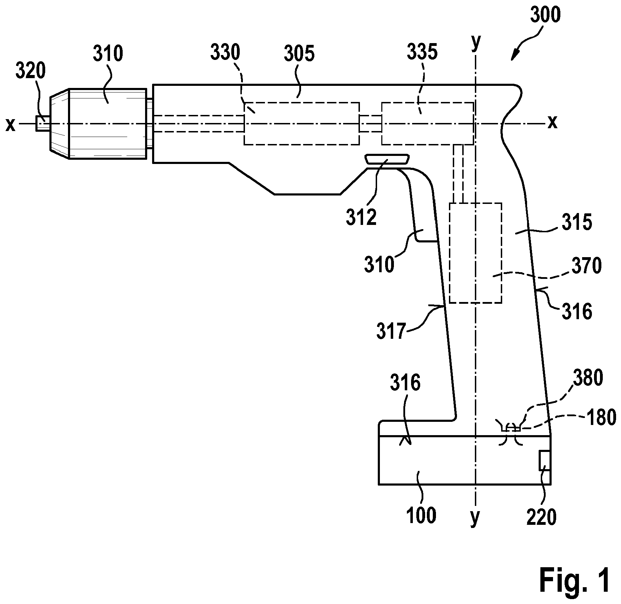

Die Figur 1 zeigt ein als Handwerkzeugmaschine 300 ausgebildetes Elektrogerät, welches beispielhaft als Akku-Bohrschrauber ausgebildet ist. Entsprechend ist die Handwerkzeugmaschine 300 in der dargestellten Ausführungsform zur netzunabhängigen Stromversorgung mechanisch und elektrisch mit einem Akkupack 100 verbunden. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, unabhängig davon, ob sie, wie dargestellt, mit einem Akkupack 100 als netzunabhängige Stromversorgung oder mit einer netzabhängigen Stromversorgung betrieben werden. Die Handwerkzeugmaschine 300 weist ein in einem Gehäuse 305 angeordnetes Getriebe 330 zur Übertragung eines von einem Antriebsmotor 335 erzeugten Drehmomentes auf eine um eine Drehachse x rotierende Antriebswelle, an welcher eine Werkzeugaufnahme 320 für ein nicht dargestelltes Werkzeug befestigt ist, und einen Handgriff 315 auf. Innerhalb des Gehäuses 305 ist eine Elektronik 370 angeordnet, welche in elektronischem und/oder mechanischem Kontakt mit dem Antriebsmotor 335 und/oder dem Getriebe 330 steht. Der Handgriff 315 dient als Auflagefläche für eine Hand eines Bedieners der Handwerkzeugmaschine 300 und weist in der Regel eine Längsachse y, eine Vorderseite 317, die entlang einer Achse x in Richtung der Werkzeugaufnahme 320 zeigt, eine Rückseite 316, und zwei Seitenflächen 318 auf.

Im Bereich des Handgriffes 315 ist ein erstes Bedienelement 310 für die Energieversorgung des Antriebsmotors 335 angeordnet, wobei das erste erstes Bedienelement 310 aus dem Gehäuse 305 für den Benutzer manuell zugänglich herausragt, so dass in einer an sich bekannten Art und Weise durch eine Druckbewegung des ersten Bedienelementes 310 eine Steuerung und/oder Regelung des Antriebsmotors bevorzugterweise in Abhängigkeit vom Verstellweg des ersten Bedienelementes 310 ermöglicht werden kann, und so die Spannungsversorgung für den Antriebsmotor 335 ein- und/oder auszuschalten. Ferner weist die Handwerkzeugmaschine 300 ein zweites Bedienelement 312 in Form eines Schiebeschalters zum Einstellen der Drehrichtung des Antriebsmotors 335 der Handwerkzeugmaschine 300 auf. Das zweite Bedienelement 312 ist senkrecht zur Drehachse x der Antriebswelle, insbesondere der Werkzeugaufnahme 320 der Handwerkzeugmaschine 300, verschieblich angeordnet, so dass das zweite Bedienelement 312 bei Betätigung zwischen einer ersten Position, einer zweiten Position und einer dritten Position hin und her bewegt werden kann. Dabei legen jeweils die erste und zweite Position eine Drehrichtung des Antriebsmotors fest. Somit kann der Benutzer der Handwerkzeugmaschine 300 bereits anhand der Positionen des zweiten Bedienelements 312 erkennen, in welchem Arbeitsmodus die Handwerkzeugmaschine 300 arbeitet. Zusätzlich weist das zweite Schaltelement zwischen der ersten Position und der zweiten Position, eine dritte Position, beispielsweise eine Mittelstellung, auf, wobei in der dritten Position eine elektrische, elektromechanische und/oder mechanische Unterbrechung des Motorstroms erfolgt. So kann zum Beispiel die Bedienung des ersten Schaltelementes 310 mechanisch gesperrt sein, wobei das zweite Bedienelement 312 bei Bewegung in eine dritte Position verriegelnd auf das erste Schaltelement 310 wirkt. Dabei kann das zweite Bedienelement 312 wie dargestellt als Schiebeschalter oder als Kippschalter ausgeführt sein.

Das erste und das zweite Bedienelement 310, 312 sind entlang der Drehachse x derart angeordnet, dass es möglich ist, das sowohl das erste als das zweite Bedienelement 310, 312 mit dem Zeigefinger oder Mittelfinger zu betätigen. Dabei ist der Abstand zwischen dem ersten Bedienelement 310 und dem zweiten Bedienelement 312 so gewählt, dass eine Einhandbedienung der Handwerkzeugmaschine 300 möglich ist. Beide Bedienelemente 310, 312 sind ferner in einem Bereich unterhalb der Drehachse x angeordnet und ragen aus dem Gehäuse 305 heraus.

In der in der Figur 1 gezeigten Position ist das Akkupack 100 an dem Handgriff 315 der Handwerkzeugmaschine 300 befestigt und durch Verriegelungsmittel verriegelt. Durch die Anordnung des Akkupacks 100 unterhalb des Handgriffs 315 wird die Bedienung der Handwerkzeugmaschine 300 nicht gestört. Die nicht im Detail dargestellten Verriegelungsmittel umfassen unter anderem ein Verriegelungselement und ein Betätigungselement 220. Durch Betätigung des Betätigungsmittels 220 kann das Akkupack 100 von dem Handgriff 315 der Handwerkzeugmaschine 300 gelöst werden. Ferner weist die Handwerkzeugmaschine 300 eine Schnittstelle 380 auf. Das in Figur 1 dargestellte Akkupack 100 ist beispielsweise als Schiebeakkupack ausgeführt, und weist eine zur Schnittstelle 380 der Handwerkzeugmaschine 300 korrespondierende Schnittstelle 180 auf. Eine weitere Ausführungsform ist ein um eine Schwenkachse verschwenkbar gelagertes Akkupack 100, welches an der der Schwenkachse gegenüberliegenden Seite des Akkupacks 100 durch Verrasten, Verschrauben, Verklemmen oder Verspannen an dem Gehäuse 305 der Handwerkzeugmaschine 300 lösbar arretiert werden kann. Auf diese Weise kann wirksam einem möglichen Abfallen des Akkupacks vom Gehäuse entgegengewirkt werden.

Beim Anbringen des dargestellten Schiebeakkupacks 100 an die Handwerkzeugmaschine 300 werden an der Handwerkzeugmaschine 300 vorgesehene Aufnahmemittel, z. B. Führungsnuten und Führungsrippen, mit korrespondierenden Führungselementen 110 des Akkupacks 100 in Eingriff gebracht, wobei das Akkupack 100 in einer Schieberichtung entlang der Aufnahmemittel des Handgriffs 315 eingeführt und entlang einer unteren, im Wesentlichen senkrecht zur Drehachse x der Handwerkzeugmaschine 300 ausgerichteten Außenfläche des Handgriffs 315 in die Akkupackaufnahme einer Handwerkzeugmaschine 300 geschoben wird. Grundsätzlich kann als Akkupack ist aber eine Verwendung Alternativ zum Schiebeakkupack ist auch eine Ausführung als Dreh- oder Schwenkakkupack möglich.

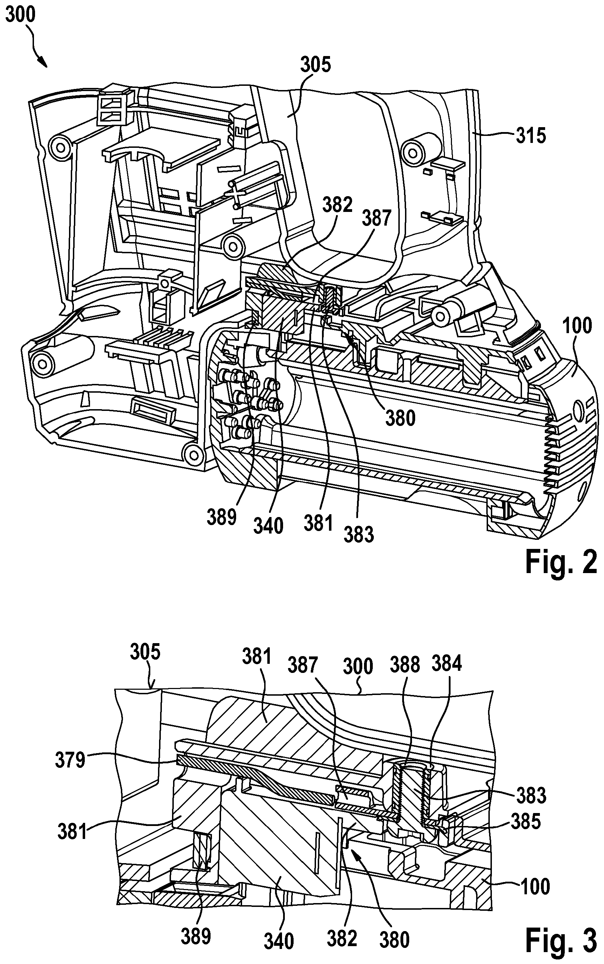

Wie im Detail in den Figuren 2 und 3 dargestellt, wird dabei die Schnittstelle 180 des Akkupacks 100 in die Schnittstelle 380 der Handwerkzeugmaschine 300 oder eine nicht dargestellte korrespondierende Schnittstelle eines Ladegerätes geschoben. Während des Schiebens greifen die handwerkzeugseitigen Kontaktelemente 340 in eine nicht im Detail dargestellten akkupackseiteigen Kontaktspalte, in welcher die akkupackseitigen Kontaktelemente angeordnet sind, hinein. Bei einer derartigen Verschiebung der Kontaktmittel 340 wird das elastische Element 389 gespannt, so dass die Kontaktmittel 340 durch die von dem elastischen Element 389 ausgeübte Kraft in die Gegenkontaktelemente des Akkupacks 100 gedrückt werden. Über die akkupackseiteigen Kontaktspalten das Akkupackschnittstelle 180 und den darin angeordneten Kontaktelementen 340 der handwerkzeugseitigen Schnittstelle 180 kann das Akkupack 100 der Handwerkzeugmaschine 300 und/oder dem Ladegerät zugeordnet werden, so dass bei einem Betrieb der Handwerkzeugmaschine 300 über die Kontaktelemente 340 und die Gegenkontaktelemente eine elektrische Verbindung zwischen dem Akkupack 100 und der Handwerkzeugmaschine 300 hergestellt wird.

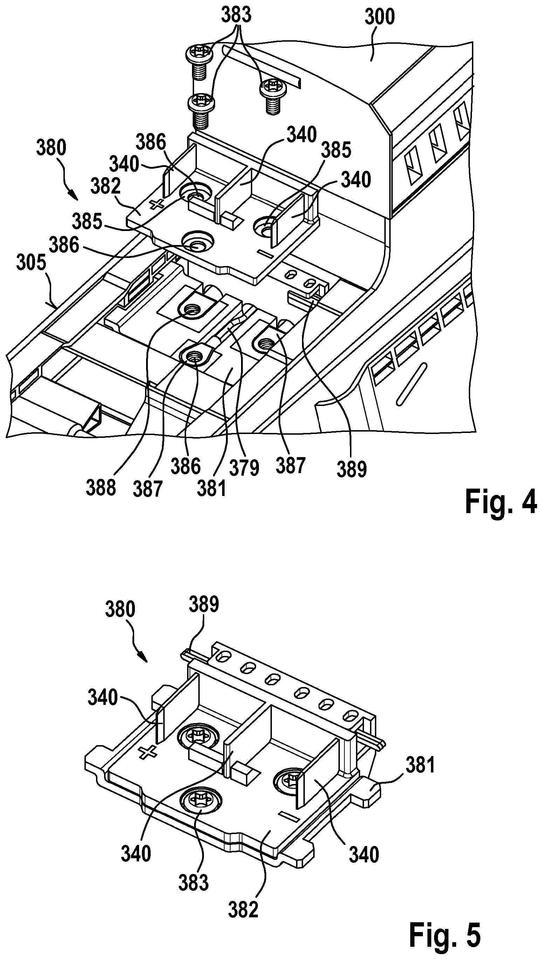

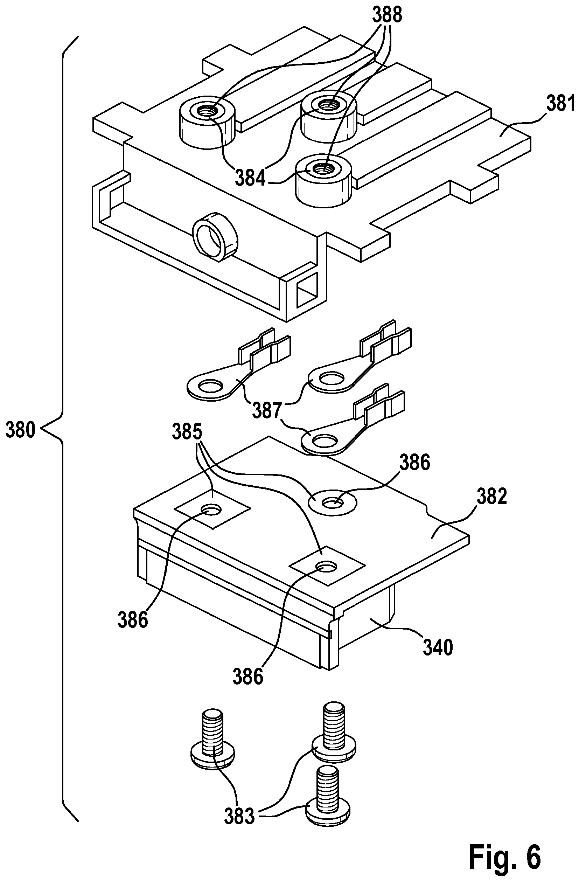

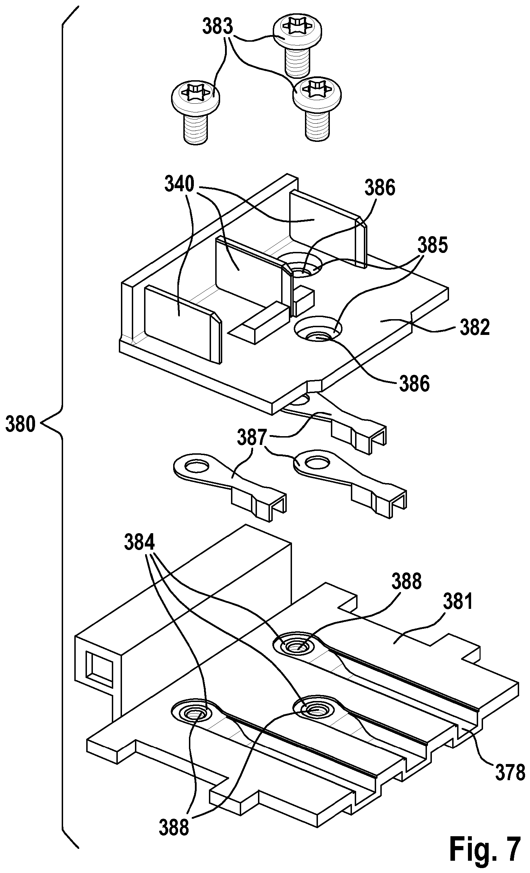

In den Figuren 2 und 3 ist eine perspektivische Unteransicht der handwerkzeugseitigen Schnittstelle 380 mit eingebauten Akkupack 100 dargestellt, wohingegen in Figur 4 eine Unteransicht einer Handwerkzeugmaschine 300 ohne eingesetzten Akkupack 100 dargestellt ist. Die Figuren 5, 6 und 7 zeigen jeweils eine perspektivische Ansicht der handwerkzeugseitigen Schnittstelle 380. Wobei in Figur 5 eine Unteransicht einer zusammengebaute Schnittstelle 380 dargestellt ist und die Figuren 6 und 7 jeweils eine Explosionsansicht der Schnittstelle 380 zeigen. In der dargestellten Ausführungsvariante ist das Basiselement 381 fest in das Gehäuse 305 der Handwerkzeugmaschine 200 integriert. Der Kontaktträger 382 weist drei Kontaktelemente 340 auf und ist mittels der Kontaktmittel 383 lösbar am Basiselement 381 befestigt. Die Kontaktmittel 383 greifen zur Befestigung des Kontaktträgers 382 jeweils durch eine Aussparung 386 im Kontaktträger 382 hindurch. Dabei sind die auf dem Kontaktträger 382 angeordneten Kontaktelemente 340 jeweils mit einem ersten elektrischen Verbindungselement 385 verbunden, wobei jeweils ein Verbindungselement 385 in eine Aussparung 386 des Kontaktträgers 382 integriert ist.

Auch das Basiselement 381 weist wenigstens eine Öffnung 388 auf, wobei vorteilhafterweise die Anzahl der Öffnungen 388 der Anzahl der Aussparungen 386 im Kontaktträger 382 entspricht, wobei in jede Öffnung 388 ein zweites elektrisches Verbindungselement 384 integriert ist, so das mittels der Kontaktmittel 383 eine elektrische Verbindung zwischen dem Kontaktträger 382 und dem Basiselement 381 hergestellt werden kann. Im dargestellten Ausführungsbeispiel weist die Schnittstelle 380 des Weiteren drei zweite Verbindungselemente 387 in Form von Kabelschuhen 387 auf, welche korrespondierend zu den Öffnungen 388 im Basiselemente 381 und den Aussparungen 386 im Kontaktträger 382 angeordnet sind und einer elektrischen Kontaktierung zwischen der Schnittstelle 380 und der Elektronik 370 der Handwerkzeugmaschine 300 dienen. Die elektrische Kontaktierung zwischen dem Basiselement 381 und der Elektronik 370 der Handwerkzeugmaschine 300 kann dabei sowohl mittels der genannten Kabelschuhe 387 lösbar als auch dauerhaft, beispielsweise mittels Anlöten der Verbindungkabel 379 oder der Verbindungselemente 387 unmittelbar an das Basiselement 381, erfolgen. Bei einer lösbaren Anbindung werden die Kabelschuhe 387 mittels der Kontaktmittel 389 zwischen dem Basiselement 381 und dem Kontaktträger 382 eingeklemmt, wobei das Basiselement 381 Ausnehmungen 378 zur Aufnahme der Kabelschuhe 387 und /oder von Verbindungkabeln 379 aufweist.

Zusätzlich oder alternativ können sowohl die Öffnungen 388 im Basiselement 381 als auch die Aussparungen 386 im Kontaktträger 382 unmittelbar als Verbindungselemente 384, 385 ausgebildet sein, wobei in diesem Falle die zusätzlichen Verbindungselemente 387 eingespart werden können. Um eine sichere Aufnahme der Kontaktmittel 383 zu ermöglichen können sowohl die Öffnungen 388 im Basiselement 381 als auch die Aussparungen 386 im Kontaktträger 382 Gewindeeinsätze aufweisen, wobei die Gewindeeinsätze selber als elektrische Leiter ausgebildet sein können. Vorteilhafterweise sind die Kontaktmittel 383 unmittelbar als elektrische Leiter insbesondere als elektrisch leitende Schrauben ausgebildet. Somit werden die Kontaktelemente 340 über die in die Aussparungen 386 des Kontaktträgers 382 integrierten elektrisch leitenden ersten Verbindungselemente 385, die in die Öffnungen 388 des Basiselementes 381 integrierten zweiten elektrischen Verbindungselementen 384, die Kabelschuhe 387 und die elektrisch leitenden Kontaktmittel 383 elektrisch leitend mit der Handwerkzeugmaschine verbunden.

Durch die beschriebene Schnittstelle 380 einer Handwerkzeugmaschine 300 kann ein Benutzer unabhängig von einem Fachmann beispielsweise bei einem Defekt der Kontaktelemente 340 den Kontaktträger 382 durch Lösen der Kontaktmittel 383 vom Basiselement 381 entfernen und gegen einen Ersatzkontaktträger austauschen ohne das Gehäuse 305 der Handwerkzeugmaschine 300 selbst öffnen zu müssen. Grundsätzlich kann das Basiselement 381 weitestgehend einteilig mit dem Gehäuse 305 der Handwerkzeugmaschine 300 ausgebildet sein, bzw. bereits bei der Herstellung der Handwerkzeugmaschine 300 fest in das Gehäuse 305 integriert werden. Auf diese Weise können alle handwerkzeugseitigen Verbindungselemente bereits bei der Herstellung der Handwerkzeugmaschine 300 fest bzw. dauerhaft mit dem Basiselement 381 verbunden werden, so dass bei einem Austausch des Kontaktträgers 382 grundlegende elektronische Kontaktierungen nicht mehr durchgeführt werden müssen.

Wie in Figur 5 dargestellt weist die Schnittstelle 380 das elastische Element 389 auf, welches bei einer Verschiebung der Kontaktmittel 340 derart gespannt wird, dass die Kontaktmittel 340 durch die von dem elastischen Element 389 ausgeübte Kraft in die Gegenkontaktelemente des Akkupacks 100 gedrückt werden. Auf diese Weise kann innerhalb der Schnittstelle 380 leichtet Druck auf die Schnittstellenverbindung ausgeübt werden, wodurch beispielsweise bei einem Transport der Handwerkzeugmaschine 300 oder bei auftretenden Vibrationen während des Betriebes der Handwerkzeugmaschine 300 ein Wackeln der Verbindung zwischen den Kontaktelementen 340 der Handwerkzeugmaschine 300 und den Gegenkontaktelement des Akkupacks 100 vermindert werden kann. Ferner kann die von dem elastischen Element 389 auf das Akkupack 100 ausgeübte Kraft bei einem Lösen einer Rastverbindung genutzt werden, um das Akkupack 100 auszuwerfen, wobei eine Ausbildung des elastischen Elementes 389, wie in Figur 5 dargestellt, als Blattfeder oder andersartig denkbar ist.

## Patentansprüche

1. Handwerkzeugmaschine (300) umfassend ein Gehäuse (305) mit einem Handgriff (315), einen in dem Gehäuse (305) angeordneten Antriebsmotor (335), und eine Schnittstelle (380) zum Herstellen einer mechanischen und/oder elektrischen Verbindung der Handwerkzeugmaschine (300) mit einem Akkupack (100);
wobei
die Schnittstelle (380) ein Basiselement (381) zur elektrischen und/oder mechanischen Verbindung der Schnittstelle (380) mit der Handwerkzeugmaschine (300) und einen separaten Kontaktträger (382) aufweist; **dadurch gekennzeichnet, dass** der Kontaktträger zumindest drei Kontaktelementen (340) zur elektrischen und/oder mechanischen Kontaktierung mit zumindest einem korrespondierenden Gegenkontaktelement (140) an dem Akkupack (100) aufweist;
wobei das Basiselement (381) fest in das Gehäuse (305) der Handwerkzeugmaschine (300) integriert und der Kontaktträger (382) über wenigstens ein Kontaktmittel (383) lösbar am Basiselement (381) angeordnet ist und wobei das Basiselement (381) wenigstens eine Öffnung (388) zur Aufnahme des Kontaktmittels (383) aufweist; und wobei ein zweites elektrisches Verbindungselement (384) zur elektrischen Kontaktierung der Handwerkzeugmaschine (300) in die wenigstens eine Öffnung (388) des Basiselementes (381) integriert ist, wobei der Kontaktträger (382) derart lösbar am Basiselement (381) angeordnet ist, dass der Kontaktträger (382) von einem Benutzer ausgetauscht werden kann.

2. Handwerkzeugmaschine (300) nach Anspruch 1, **dadurch gekennzeichnet, dass** das Kontaktmittel (383) als elektrischer Leiter ausgebildet ist.

3. Handwerkzeugmaschine (300) nach einem der Ansprüche 1 bis 2, **dadurch gekennzeichnet, dass** das Kontaktmittel (383) als Befestigungs- und Verbindungsmittel in Form einer Schraube, einer Schraubhülse, einem Bajonettverschluss oder einem vertikal zu einer Akkupackeinsteckrichtung angeordneten Steckverbinder ausgebildet ist.

4. Handwerkzeugmaschine (300) nach einem der Ansprüche 1 bis 3, **dadurch gekennzeichnet, dass** der Kontaktträger (382) wenigstens eine Aussparung (386) zur Durchführung des Kontaktmittels (383) aufweist.

5. Handwerkzeugmaschine (300) nach Anspruch 4, **dadurch gekennzeichnet, dass** wenigstens ein erstes elektrisches Verbindungselement (385) in die wenigstens eine Aussparung (386) des Kontaktträgers (382) integriert ist.

6. Handwerkzeugmaschine (300) nach einem der Ansprüche 1 bis 5, **dadurch gekennzeichnet, dass** das zweite elektrische Verbindungselement (384) ein Kabelschuh (387) ist.

7. Handwerkzeugmaschine (300) nach einem der Ansprüche 1 bis 6, **dadurch gekennzeichnet, dass** die Schnittstelle (380) wenigstens ein elastisches Element (389), insbesondere ein Federelement aufweist, das dazu vorgesehen ist, die Schnittstelle (380) gegenüber der Handwerkzeugmaschine (300) verschiebbar und/oder federnd zu lagern.

8. Handwerkzeugmaschine (300) nach Anspruch 7, **dadurch gekennzeichnet, dass** das elastische Element (389) zwischen der Schnittstelle (380) und der Handwerkzeugmaschine (300), vorzugsweise zwischen dem Basiselement (381) und/oder dem Kontaktträger (382) und der Handwerkzeugmaschine (300) angeordnet ist.

9. Handwerkzeugmaschine (300) nach einem der Ansprüche 1 bis 8, **dadurch gekennzeichnet, dass** das Basiselement (381) einteilig mit dem Gehäuse (305) der Handwerkzeugmaschine (300) ausgebildet ist.

10. Werkzeugsystem, umfassend eine Handwerkzeugmaschine (300) nach einem der Ansprüche 1 bis 9 sowie einen Akkupack (100), **dadurch gekennzeichnet, dass** das Akkupack (100) zumindest ein korrespondierendes Gegenkontaktelement (140) zur elektrischen und/oder mechanischen Verbindung mit der Schnittstelle (380) der Handwerkzeugmaschine (300) aufweist.

## Claims

1. Hand-held power tool (300) comprising a housing (305) with a handle (315), and comprising a drive motor (335) which is arranged in the housing (305), and an interface (380) for producing a mechanical and/or electrical connection of the hand-held power tool (300) to a rechargeable battery pack (100); wherein the interface (380) has a basic element (381) for the electrical and/or mechanical connection of the interface (380) to the hand-held power tool (300), and has a separate contact carrier (382);
**characterized in that** the contact carrier has at least three contact elements (340) for making electrical and/or mechanical contact with at least one corresponding mating contact element (140) on the rechargeable battery pack (100); wherein the basic element (381) is fixedly integrated in the housing (305) of the hand-held power tool (300), and the contact carrier (382) is arranged releasably on the basic element (381) via at least one contact means (383), and wherein the basic element (381) has at least one opening (388) for receiving the contact means (383); and wherein a second electrical connecting element (384) for making electrical contact with the hand-held power tool (300) is integrated in the at least one opening (388) in the basic element (381), wherein the contact carrier (382) is arranged releasably on the basic element (381) in such a manner that the contact carrier (382) can be exchanged by a user.

2. Hand-held power tool (300) according to Claim 1, **characterized in that** the contact means (383) is designed as an electrical conductor.

3. Hand-held power tool (300) according to either of Claims 1 and 2, **characterized in that** the contact means (383) is designed as a fastening and connecting means in the form of a screw, a screw sleeve, a bayonet catch or a plug-in connector arranged vertically with respect to a plugging-in direction of a rechargeable battery pack.

4. Hand-held power tool (300) according to one of Claims 1 to 3, **characterized in that** the contact carrier (382) has at least one cutout (386) for the passage of the contact means (383).

5. Hand-held power tool (300) according to Claim 4, **characterized in that** at least one first electrical connecting element (385) is integrated in the at least one cutout (386) of the contact carrier (382).

6. Hand-held power tool (300) according to one of Claims 1 to 5, **characterized in that** the second electrical connecting element (384) is a cable lug (387).

7. Hand-held power tool (300) according to one of Claims 1 to 6, **characterized in that** the interface (380) has at least one elastic element (389), in particular a spring element, which is provided to displaceably and/or resiliently mount the interface (380) in relation to the hand-held power tool (300).

8. Hand-held power tool (300) according to Claim 7, **characterized in that** the elastic element (389) is arranged between the interface (380) and the hand-held power tool (300), preferably between the basic element (381) and/or the contact carrier (382) and the hand-held power tool (300).

9. Hand-held power tool (300) according to one of Claims 1 to 8, **characterized in that** the basic element (381) is formed integrally with the housing (305) of the hand-held power tool (300).

10. Tool system, comprising a hand-held power tool (300) according to one of Claims 1 to 9 and a rechargeable battery pack (100), **characterized in that** the rechargeable battery pack (100) has at least one corresponding mating contact element (140) for the electrical and/or mechanical connection to the interface (380) of the hand-held power tool (300).

## Revendications

1. Machine-outil à main (300) comprenant un boîtier (305) avec une poignée (315), un moteur d'entraînement (335) agencé dans le boîtier (305), et une interface (380) pour établir une liaison mécanique et/ou électrique de la machine-outil à main (300) avec un bloc de batteries (100) ;
l'interface (380) présentant un élément de base (381) pour la liaison électrique et/ou mécanique de l'interface (380) avec la machine-outil à main (300) et un support de contact séparé (382) ;
**caractérisée en ce que** le support de contact présente au moins trois éléments de contact (340) pour la mise en contact électrique et/ou mécanique avec au moins un élément de contact complémentaire correspondant (140) sur le bloc de batteries (100) ;
l'élément de base (381) étant intégré de manière fixe dans le boîtier (305) de la machine-outil à main (300) et le support de contact (382) étant agencé de manière amovible sur l'élément de base (381) par l'intermédiaire d'au moins un moyen de contact (383) et l'élément de base (381) présentant au moins une ouverture (388) pour recevoir le moyen de contact (383) ; et un deuxième élément de liaison électrique (384) pour la mise en contact électrique de la machine-outil à main (300) étant intégré dans l'au moins une ouverture (388) de l'élément de base (381), le support de contact (382) étant agencé de manière amovible sur l'élément de base (381) de telle sorte que le support de contact (382) peut être remplacé par un utilisateur.

2. Machine-outil à main (300) selon la revendication 1, **caractérisée en ce que** le moyen de contact (383) est configuré sous forme de conducteur électrique.

3. Machine-outil à main (300) selon l'une quelconque des revendications 1 à 2, **caractérisée en ce que** le moyen de contact (383) est configuré sous la forme d'un moyen de fixation et de liaison sous la forme d'une vis, d'une douille filetée, d'une fermeture à baïonnette ou d'un connecteur enfichable agencé verticalement par rapport à une direction d'enfichage du bloc de batteries.

4. Machine-outil à main (300) selon l'une quelconque des revendications 1 à 3, **caractérisée en ce que** le support de contact (382) présente au moins un évidement (386) pour le passage du moyen de contact (383).

5. Machine-outil à main (300) selon la revendication 4, **caractérisée en ce qu'**au moins un premier élément de liaison électrique (385) est intégré dans l'au moins un évidement (386) du support de contact (382).

6. Machine-outil à main (300) selon l'une quelconque des revendications 1 à 5, **caractérisée en ce que** le deuxième élément de liaison électrique (384) est une cosse de câble (387).

7. Machine-outil à main (300) selon l'une quelconque des revendications 1 à 6, **caractérisée en ce que** l'interface (380) présente au moins un élément élastique (389), notamment un élément à ressort, qui est prévu pour monter l'interface (380) de manière déplaçable et/ou à ressort par rapport à la machine-outil à main (300).

8. Machine-outil à main (300) selon la revendication 7, **caractérisée en ce que** l'élément élastique (389) est agencé entre l'interface (380) et la machine-outil à main (300), de préférence entre l'élément de base (381) et/ou le support de contact (382) et la machine-outil à main (300) .

9. Machine-outil à main (300) selon l'une quelconque des revendications 1 à 8, **caractérisée en ce que** l'élément de base (381) est configuré d'une seule pièce avec le boîtier (305) de la machine-outil à main (300).

10. Système d'outil, comprenant une machine-outil à main (300) selon l'une quelconque des revendications 1 à 9 ainsi qu'un bloc de batteries (100), **caractérisé en ce que** le bloc de batteries (100) présente au moins un élément de contact complémentaire correspondant (140) pour la liaison électrique et/ou mécanique avec l'interface (380) de la machine-outil à main (300).
